# EUROPÄISCHE PATENTSCHRIFT

(11) **EP 0 483 166 B1**
(45) Veröffentlichungstag und Bekanntmachung des Hinweises auf die Patenterteilung: **21.09.1994**
(21) Anmeldenummer: 90909129.0
(22) Anmeldetag: 20.06.1990
(51) Int. Cl.: F02D 41/34, F02D 41/06, F02D 41/24

(54) **SEQUENTIELLES KRAFTSTOFFEINSPRITZVERFAHREN**
SEQUENTIAL FUEL INJECTION PROCESS
PROCEDE D'INJECTION DE CARBURANT SEQUENTIELLE

(30) Priorität: 15.07.1989 DE 3923479
(43) Veröffentlichungstag der Anmeldung: 06.05.1992
(73) Patentinhaber: ROBERT BOSCH GMBH, 70442 Stuttgart (DE)
(72) Erfinder: DENZ, Helmut, D-7000 Stuttgart 1 (DE); GRIESER, Klemens, D-7257 Ditzingen 5 (DE)
(86) Internationale Anmeldenummer: DE9000465
(87) Internationale Veröffentlichungsnummer: WO9101443

(56) Entgegenhaltungen:
- EP-A- 0 016 843
- EP-A- 0 059 586
- US-A- 3 935 846
- US-A- 4 495 924
- Patent Abstracts of Japan, Band 8, Nr. 136 (M-304)(1573), 23. Juni 1984 & JP, A, 5937236 (NISSAN JIDOSHA K.K.)
- Patent Abstracts of Japan, Band 9, Nr. 132 (M-385), 7. Juni 1985 & JP, A, 60013950 (TOYOTA JIDOSHA K.K.)
- Patent Abstracts of Japan, Band 11, Nr. 10 (M-552), 10. Januar 1987 & JP, A, 61187560 (DIESEL KIKI CO. LTD)

## Beschreibung

Die Erfindung betrifft ein Verfahren zum Ausführen von sequentiellen Einspritzvorgängen beim Erreichen vorgegebener Einspritzwinkel.

### Stand der Technik

Sequentielle Einspritzverfahren, im folgenden SEFI-Verfahren genannt (SEFI = SEquential Fuel Injection), werden an Brennkraftmaschinen durchgeführt, bei denen jeweils ein Einspritzventil einem Zylinder oder einer Gruppe von Zylindern zugeordnet ist. Abhängig vom jeweiligen Betriebszustand der Brennkraftmaschine legt ein Rechner Werte für Anfang und Ende der Aktivierung eines jeweiligen Einspritzventiles fest. Eine in der Praxis verwendete Variante liegt darin, Einspritzbeginnwinkel festzulegen und das Ende für die Einspritzung aus einer Einspritzdauer zu berechnen. Eine andere Variante geht dahin, Einspritzendewinkel festzulegen und aus einem jeweiligen Einspritzendewinkel und einer zugehörigen Einspritzdauer den Einspritzbeginnwinkel zu berechnen (Siehe US-A-4 495 924).

Der Erfindung liegt die Aufgabe zugrunde, ein SEFI-Verfahren anzugeben, das es erlaubt, vorgegebene Einspritzwinkel genaue einzuhalten, und Überfettungen zu vermeiden. Erreicht wird dies mit den Merkmalen nach Anspruch 1.

Beim erfindungsgemäßen Verfahren werden KurbelwellenwinkelInkrementsignale erzeugt und diese werden, bezogen auf ein Referenzsignal, gezählt. Sobald der Zählwert der Inkrementsignale einen festgelegten Einspritzwinkel-Inkrementwert erreicht, wird der diesem Inkrementwert zugeordnete Einspritzvorgang ausgeführt, also ein Ventil beginnt oder beendet das Einspritzen von Kraftstoff.

Dadurch, daß zum Ermitteln, ob ein vorgegebener Einspritzwinkel erreicht ist, keinerlei Zeitmessung mehr verwendet wird, ist das Verfahren von Drehzahlschwankungen in bezug auf das Ermitteln der festgelegten Winkel nicht beeinflußbar.

Wird für jeden Einspritzvorgang der zugehörige Einspritzbeginnwinkel festgelegt, kann dieser Winkel mit der Genauigkeit der Inkrementteilung, z. B. einer Genauigkeit von 6° Kurbelwellenwinkel eingehalten werden, unabhängig davon, wie groß Drehzahlschwankungen sind. Die winkelmäßige Lage des Einspritzendes liegt dann aber nicht genau fest, da in erster Linie wichtig ist, daß eine vorgegebene Einspritzdauer eingehalten wird. Mit dem erfindungsgemäßen Verfahren ist es aber ohne weiteres möglich, das Einspritzende auf einen maximalen Kurbelwinkel zu begrenzen, z. B. auf denjenigen Winkel, bei dem der zuletzt eingespritzte Kraftstoff gerade noch den Zylinder erreicht bevor das Einlaßventil für den Zylinder schließt, für den gerade eingespritzt wird. Beim herkömmlichen Segment-SEFI-Verfahren war dies nicht möglich, da der Zeitpunkt des Schließens dieses Ventiles bei Drehzahländerungen gar nicht genau bestimmt werden konnte.

In der Praxis ist es von Vorteil, wenn das Einspritzende um einen bestimmten Winkel vor dem Winkel "Einlaßventil öffnen" liegt. Aus diesem Winkel und der Einspritzdauer ist der Einspritzbeginnwinkel festzulegen. Gemäß einer vorteilhaften Weiterbildung der Erfindung werden derartig bestimmte Einspritzbeginnwinkel aus einem Kennfeld ausgelesen, das über Werte von Drehzahl und Einspritzdauer adressierbar ist. Die Einspritzbeginnwinkel werden aber in jedem Fall mit solchen Werten in einem Kennfeld abgelegt oder so berechnet, daß sichergestellt ist, daß nicht bereits mit einem Einspritzvorgang für einen folgenden Ansaugvorgang begonnen wird, bevor der aktuelle Ansaugvorgang abgeschlossen ist. Dadurch wird ein Überfetten im aktuellen Ansaugvorgang vermieden. Ein solches Überfetten ist beim Verwenden des herkömmlichen Segment-SEFI-Verf-ahrens nicht ausschließbar, da die Kurbelwinkellage "Einlaß schließen" nur aufgrund einer Zeitimpulszählung abgeschätzt werden kann, die bei Drehzahländerungen mehr oder weniger fehlerhaft ist.

Das erfindungsgemäße Verfahren hat also den Vorteil, daß mit dem Einspritzen mit großer Genauigkeit bei vorgegebenen Kurbelwellenwinkeln begonnen und/oder aufgehört werden kann. Überfettungen und/oder Ausmagerungen können dadurch mit großer Zuverlässigkeit unterbunden werden. Außerdem kann sichergestellt werden, daß unerwünschte Einspritzzustände unterbleiben, daß z.B. nicht in das offene Einspritzventil gespritzt wird in Fällen, wo dies nachteilig wäre.

Ein bedeutender Vorteil des erfindungsgemäßen Verfahrens ist dessen einfache Realisierbarkeit. Diese einfache Realisierbarkeit besteht aus dem Grund, daß seit einigen Jahren Brennkraftmaschinen am Markt sind, die über einen Kurbelwinkel-Inkrementgeber verfügen. Das erfindungsgemäBe Verfahren nutzt diese vorhandenen Inkrementsignale unmittelbar.

### Zeichnung

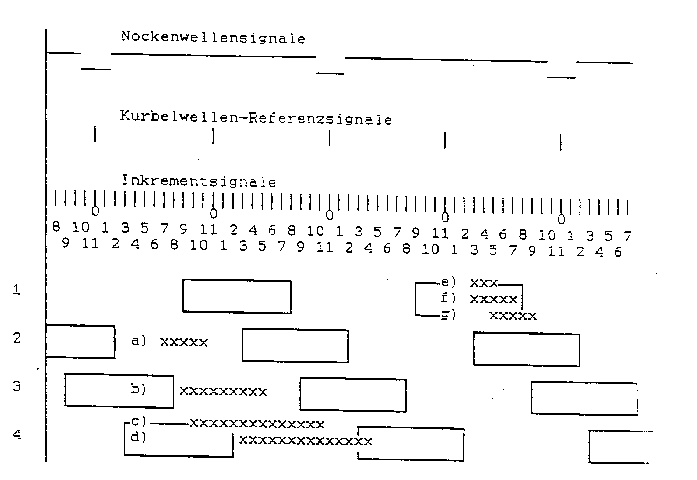

Die einzige Figur stellt ein Diagramm mit sieben Beispielen a) bis g) für Verfahrensabläufe dar.

### Beschreibung von Ausführungsbeispielen

Die Ausführungsbeispiele betreffen einen Vierzylinder-Viertaktmotor. Bei einem solchen erstreckt sich, wie bei jedem Viertaktmotor, ein einzelner Arbeitszyklus über 720° Kurbelwellenwinkel, also über zwei Kurbelwellenumdrehungen. In dieser Zeit dreht sich die Nockenwelle einmal. Ein Nockenwellensensor gibt bei jeder Umdrehung der Nockenwelle ein Nockenwellensignal aus, also eines alle 720° Kurbelwinkel. Ein Kurbelwellensensor stellt darüber hinaus alle 360° Kurbelwellen-Referenzsignale zur Verfügung. Immer dann, wenn ein Nockenwellensignal und ein Kurbelwellen-Referenzsignal gemeinsam auftreten, liegt der Beginn eines Arbeitszyklus vor. Tritt dagegen ein Kurbelwellen-Referenzsignal ohne gleichzeitiges Nockenwellensignal auf, ist die Hälfte eines Arbeitszyklus erreicht.

Von einem dritten Sensor, der ein sich synchron mit der Kurbelwelle drehendes Geberrad abtastet, werden Inkrementsignale geliefert. In der Figur ist der Übersichtlichkeit halber davon ausgegangen, daß zwischen jeweils zwei benachbarten Kurbelwellen-Referenzsignalen 12 Inkrementsignale ausgegeben werden, also eines alle 30° Kurbelwellenwinkel. In der Praxis ist die Auflösung der Inkrementsignale jedoch höher, derzeit typischerweise 6° Kurbelwellenwinkel bei Inkrement-Systemen. In der Figur ist davon ausgegangen, daß immer dann, wenn ein Kurbelwellen-Referenzsignal auftritt, die Inkrementsignale neu ab dem Wert "0" gezählt werden. Der Kurbelwinkel 540° wird demgemäß dadurch erkannt, daß festgestellt wird, daß das letzte Kurbelwellen-Referenzsignal dasjenige war, zu dem kein Nockenwellensignal auftrat, und daß seitdem sechs Inkrementsignale angefallen sind. Stattdessen könnte auch mit jedem Nockenwellensignal neu zu zählen begonnen werden. Dann würde der Kurbelwellenwinkel 540° dem Inkrementsignal "18" entsprechen. Auch andere Kombinationen der anfallenden Signale sind möglich, um den jeweils aktuellen Kurbelwellenwinkel zu ermitteln.

Im vorgenannten Ausführungsbeispiel ist zur einfachen Darstellung ein sogenanntes Zweigeberinkrementsystem beschrieben, welches je einen Geber zur Erzeugung der Inkrementsignale und der KW-Referenzsignale erfordert. Dasselbe Verfahren ist jedoch mit dem inzwischen üblicheren Eingeberinkrementsystem einsetzbar, bei welchem mit nur einem Sensor ein Geberrad auf der Kurbelwelle abgetastet wird, dessen Zähne einmal pro Umdrehung eine Lücke aufweisen, die als KW-Referenzsignal ausgewertet wird.

In der Figur sind durch Rechtecke die Kurbelwinkelspannen eingezeichnet, über die die Einlaßventilanordnungen der Zylinder 1 - 4 geöffnet sind. Die Zylindernumerierungen sind am linken Rand untereinander eingetragen. Mit "xx..x" sind verschiedene winkelmäßige Spannen von Einspritzvorgängen eingezeichnet. Insgesamt sind sieben Fälle a) bis g) unterschieden.

Die Fälle a) bis c) betreffen Betriebszustände, für die gewünscht ist, daß der jeweilige Einspritzendewinkel in einem festen Abstand vor "Einlaß öffnen" liegt. Für alle drei Fälle ist vorausgesetzt, daß die Einspritzdauer, also die Zeitspanne, über die sich der Einspritzvorgang erstreckt, gleich lang ist. Es soll jedoch die Drehzahl von a) über b) nach c) zunehmen. Dies bedeutet, daß die winkelmäßige Erstreckung für die Einspritzung immer größer wird. Demgemäß liegt der Einspritzbeginn im Fall b) dichter hinter "Einlaß schließen" des vorigen Ansaugtaktes als der Einspritzbeginn im Fall a). Im Fall des Beispieles c) würde dann, wenn das oben genannte gewünschte Einspritzende beibehalten werden würde, mit dem Einspritzen bereits während der Ansaugdauer des aktuellen Ansaugtaktes begonnen werden, um zum gewünschten Ende abschließen zu können. Beim bevorzugten Ausführungsbeispiel wird jedoch so verfahren, daß ein Einspritzbeginnwinkel nie in einen laufenden Ansaugtakt fällt. Entsprechend liegt der Einspritzbeginn im Fall d) direkt nach "Einlaß schließen" des vorherigen Taktes. Die Einspritzdauern sind in den Fällen c) und d) gleich. Das Verschieben des Einspritzbeginns führt dann dazu, daß das gewünschte Einspritzende nicht mehr beibehalten werden kann. Im Falle der dargestellten, sehr langen Einspritzdauer fällt das Einspritzende in den Ansaugtakt, so daß in das offene Einlaßventil eingespritzt wird. Dies führt jedoch zu geringeren Betriebsstörungen als sie auftreten, wenn es wie im Fall c) zu einer überfettung im aktuellen und einer Abmagerung im anschließenden Ansaugtakt kommt.

Zum Festlegen von Einspritzwinkeln, wie sie bei den Abläufen gemäß den Varianten a) - d) verwendet werden, bestehen verschiedene Möglichkeiten. Da, wie erläutert, bestimmte Einspritzendewinkel gewünscht sind, ist die naheliegende Möglichkeit die, Einspritzendewinkel in einem Kennfeld adressierbar über Werte von Betriebsgrößen, vorzugsweise Drehzahl und Last, zu speichern. Abhängig von den aktuellen Werten der Adressier-Betriebsgrößen wird dann der jeweils zugehörige Einspritzendewinkel aus dem Kennfeld ausgelesen. Mit Hilfe der anderweitig bestimmten Einspritzdauer und der aktuellen Drehzahl wird der zugehörige Einspritzbeginnwinkel berechnet. Weniger Rechenaufwand ergibt sich jedoch dann, wenn unmittelbar Einspritzbeginnwinkel aus einem Kennfeld, abhängig von Werten von Adressierbetriebsgrößen ausgelesen werden. Von besonderem Vorteil ist es hierbei, als Adressier-Betriebsgrößen die Drehzahl und die jeweils berechnete Einspritzdauer zu verwenden. Vorzugsweise speichert das Kennfeld für Startbetrieb andere Einspritzbeginnwinkel als für Normalbetrieb, bei jeweils ansonsten gleichen Werten der übrigen Adressiergrößen, also z. B. von Drehzahl und Einspritzdauer. Das Ende des Startbetriebs kann beliebig festgelegt werden, insbesondere durch die Bedingunc, daß eine bestimmte Drehzahl erreicht wird. Von Vorteil ist es auch, in den aus einem Kennfeld ausgelesenen Einspritzwinkeln noch Vorhaltewinkel zu berücksichtigen, so daß auch bei auftretender Beschleunigung ein bestimmter spätester Einspritzendewinkel nie überschritten wird. In allen Fällen ist es aber ein ganz besonderer Vorteil, daß sichergestellt werden kann, daß kein Einspritzbeginnwinkel vor "Einlaß schließen" eines aktuellen Ansaugtaktes liegt.

Die im vorigen Satz genannte Bedingung kann noch etwas verfeinert werden, wenn die Flugzeit des Kraftstoffs von einem Einspritzventil zum zugehörigen Einlaßventil berücksichtigt wird. Bereits um diese Flugzeit früher kann nämlich mit einem neuen Einspritzvorgang vor "Einlaß schließen" des aktuellen Taktes begonnen werden.

Im Beispielsfall e) wird die gesamte Kraftstoffmenge in das offene Einspritzventil für den Zylinder 1 gespritzt. Dies ist z.B. dann von Vorteil, wenn im Falle von magerem Gemisch eine Ladungsschichtung dahingehend erzielt werden soll, daß relativ fettes Gemisch im oberen Teil des Zylinders, also dicht bei der Zündkerze liegt. Auch in diesem Fall wird der Einspritzbeginnwinkel mit besonderem Vorteil unmittelbar durch Adressieren eines Speichers mit aktuellen Werten von Drehzahl und Einspritzdauer ausgelesen.

Im Beispiel f) ist angenommen, daß die Einspritzdauer dieselbe ist wie im Fall e), daß jedoch die Drehzahl höher ist. Der Einspritzvorgang erstreckt sich dann über einen größeren Kurbelwinkelbereich als im Fall e). Es ist jedoch angenommen, daß das Einspritzende immer noch vor "Einlaß schließen" des aktuellen Ansaugtaktes liegt. Wäre dies nicht der Fall, würde vorzugsweise mit "Einlaß schließen" der Einspritzvorgang beendet werden, selbst wenn noch nicht die gesamte eigentlich gewünschte Kraftstoffmenge abgespritzt wäre. Dadurch wird vermieden, daß die Restmenge beim nächsten Ansaugtakt zu Überfettung führt. Für den aktuellen Ansaugtakt ist die Restmenge ohnehin bedeutungslos, da sie nicht mehr angesaugt werden kann, so daß es also auch ohne Einfluß für den aktuellen Ansaugtakt bleibt, wenn sie gar nicht mehr abgespritzt wird. Auch bei diesem zwangsweisen Abbrechen eines Einspritzvorganges ist wieder die oben genannte Kraftstoffflugzeit zu berücksichtigen. Es wird dann der Einspritzvorgang um die genannte Flugzeit vor "Einlaß schließen" beendet.

Beispiel g) zeigt eine Variante, die Variante f) entspricht, jedoch nicht für das bisher erläuterte Inkrement-SEFI-Verfahren, sondern für ein herkömmliches Segment-SEFI-Verfahren. Es sei angenommen, daß das letzte Kurbelwellen-Referenzsignal vor dem maßgeblichen Einspritzbeginn einem Segmentsignal entspreche, wie es bei einem Segment-SEFI-Verfahren genutzt wird. Tatsächlich werden bei einem Segment-SEFI-Verfahren Segmentsignale nicht nur alle 360° Kurbelwellenwinkel abgegeben, wie dies für die in der Figur eingezeichneten Kurbelwellen-Referenzsignale gilt, sondern alle 180°. Dies ist jedoch für das Erläutern der Unterschiede zwischen den Varianten f) und g) unerheblich. Bei einem Segment-SEFI-Verfahren würde ab dem letzten Segmentsignal mit einer Zeitauszählung begonnen werden, um den Einspritzbeginn zu bestimmen. Erhöht sich nun in der Zeitspanne nach dem Berechnen der auszuzählenden Zeittakte die Drehzahl, führt dies beim Segment-SEFI-Verfahren dazu, daß nicht nur die winkelmäßige Erstreckung der Einspritzdauer vergrößert wird, wie dies anhand der Beispiele e) und f) erläutert wurde, sondern zusätzlich wird auch der Einspritzbeginn verschoben, wie aus Beispiel g) ersichtlich. Dieses Verschieben des Einspritzbeginns führt dazu, daß nun das Einspritzende über "Einlaß schließen" des maßgeblichen Ansaugtaktes hinaus reicht. Dieses Überschreiten von "Einlaß schließen" kann nicht festgestellt werden, da es zwischen zwei Segmentsignalen liegt, also in einem Bereich, in dem nur durch das Auszählen von Zeittakten Winkellagen grob abgeschätzt werden können, wenn sich die Drehzahl ändert.

## Patentansprüche

1. Verfahren zum Ausführen von sequentiellen Einspritzvorgängen bei Einspritzsystemen für Brennkraftmaschinen, wobei
- Kurbelwellenwinkel-Inkrementsignale erzeugt werden und die Inkrementsignale bezogen auf ein Referenzsignal gezählt werden,
- Einspritzbeginnwinkel als Inkrementwerte festgelegt werden,
- in einem ersten Schritt eine Einspritzdauer aus Betriebsparametern der Brennkraftmaschine bestimmt wird, und
- daß in einem zweiten Schritt die laufende Einspritzung vor dem Erreichen der im ersten Schritt festgelegten Einspritzdauer für einen Zylinder bei dem Kurbelwinkel abgebrochen wird, der um die Flugzeit des Kraftstoffs vom Einspritzventil zum zugeordneten Einlaßventil des Zylinders vor dem Schließwinkel dieses Einlaßventils erreicht wird.

2. Verfahren nach Anspruch 1, dadurch gekennzeichnet, daß der früheste Einspritzbeginnwinkel für ein Einspritzventil um diejenige Winkelspanne vor dem Schließwinkel für dieses Einlaßventil liegt, die der Flugzeit des Kraftstoffs von dem Einspritzventil bis zum zugehörigen Einlaßventil entspricht.

3. Verfahren nach Anspruch 1, dadurch gekennzeichnet, daß
- die Einspritzbeginnwinkel aus einem Kennfeld ausgelesen werden,
- dieses Kennfeld über Werte von Drehzahl und Einspritzdauer adressiert wird, und
- daß das Kennfeld für Startbetrieb andere Einspritzbeginnwinkel als für Nachstartbetrieb speichert.

4. Verfahren nach einem der Ansprüch 1 bis 3, dadurch gekennzeichnet, daß für den Fall dynamischer Betriebszustände spezielle Einspritzbeginnwinkel vorgesehen sind.

5. Verfahren nach einem der Ansprüche 1 bis 4, dadurch gekennzeichnet, daß die Einspritzendewinkel aus einem Kennfeld ausgelesen werden, das über Werte von Last und Drehzahl adressierbar ist.

## Claims

1. Process for carrying out sequential injection operations with injection systems for internal combustion engines in which
- crankshaft angle increment signals are generated and the increment signals are counted in relation to a reference signal,
- injection starting angles are specified as increment values,
- in a first step, the duration of an injection is determined from operating parameters of the internal combustion engine, and
- in which in a second step, the current injection is stopped before the injection duration determined in the first step is reached for a cylinder at such a crank-shaft angle as is reached by the transit time of the fuel from the injection valve to the associated intake valve of the cylinder before the closing angle of this intake valve.

2. Process in accordance with claim 1, characterised in that the earliest injection starting angle for an injection valve is before the closing angle for this intake valve by such an angle as corresponds to the transit time of the fuel, from the injection valve to the associated intake valve.

3. Process in accordance with claim 1, characterised in that
- the injection angles are read from a characteristic diagram,
- this characteristic diagram is addressed via values of speed (rpm) and injection duration, and
- that the characteristic diagram stores different injection starting angles for starting operation from those for subsequent operation.

4. Process in accordance with one of the claims 1 to 3, characterised in that special injection starting angles are provided in the case of dynamic operating conditions.

5. Process in accordance with one of the claims 1 to 4, characterised in that the injection stopping angles are read from a characteristic field which can be addressed via values of load and speed (rpm).

## Revendications

1. Procédé pour exécuter des opérations séquentielles d'injection dans des systèmes d'injection de moteurs à combustion interne, selon lequel :
- on génère des signaux d'incrément d'angle de vilebrequin et on compte les signaux d'incréments par rapport à un signal de référence,
- on fixe l'angle de début de l'injection comme valeur de l'incrément,
- dans une première étape, on détermine une durée d'injection à partir des paramètres de fonctionnement du moteur à combustion interne et,
- au cours d'une seconde étape, on arrête l'injection continue avant d'atteindre la durée d'injection fixée dans la première étape pour un cylindre, à l'angle de vilebrequin qui précède l'angle de fermeture de la soupape d'admission correspondante du temps de parcours nécessaire au carburant pour aller de l'injecteur à la soupape d'admission du cylindre correspondant.

2. Procédé selon la revendication 1, caractérisé en ce que l'angle de début d'injection, le plus tôt pour un injecteur précède l'angle de fermeture de cette soupape d'admission de l'angle qui correspond au temps de parcours du carburant entre l'injecteur et la soupape d'admission correspondante.

3. Procédé selon la revendication 1, caractérisé en ce l'angle de début d'injection est lu dans un champ caractéristique :
- ce champ caractéristique est adressé par des valeurs de vitesse de rotation et de durée d'injection et,
- le champ caractéristique contient d'autres angles de début d'injection pour le démarrage que pour le fonctionnement après le démarrage.

4. Procédé selon l'une des revendications 1 à 3, caractérisé en ce que des angles de début d'injection particuliers sont prévus pour le cas d'états de fonctionnement dynamiques.

5. Procédé selon l'une des revendications 1 à 4, caractérisé en ce que l'angle de fin d'injection est lu dans un champ caractéristique qui est adressé avec des valeurs de charges et de vitesses de rotation.
